(19) Europäisches Patentamt
European Patent Office
Office européen des brevets

(11) EP 4 682 184 A1

(12) EUROPEAN PATENT APPLICATION
published in accordance with Art. 153(4) EPC

(43) Date of publication:
**21.01.2026 Bulletin 2026/04**

(21) Application number: **25778071.8**

(22) Date of filing: **28.03.2025**

(51) International Patent Classification (IPC):
***C08G 59/24*** *(2006.01)* ***C08G 59/42*** *(2006.01)*
***C08G 59/66*** *(2006.01)* ***C08G 65/40*** *(2006.01)*

(52) Cooperative Patent Classification (CPC):
**C08G 59/20; C08G 59/24; C08G 59/40; C08G 59/42; C08G 59/66; C08G 65/40**

(86) International application number:
**PCT/JP2025/012906**

(87) International publication number:
**WO 2025/206352 (02.10.2025 Gazette 2025/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2024 JP 2024056819**

(71) Applicant: **DAIKIN INDUSTRIES, LTD.**
**Osaka-Shi, Osaka 530-0001 (JP)**

(72) Inventors:
- **TOGO, Yukinori**
  **Osaka-Shi, Osaka 530-0001 (JP)**
- **TANAKA, Yoshito**
  **Osaka-Shi, Osaka 530-0001 (JP)**
- **YAMAUCHI, Akiyoshi**
  **Osaka-Shi, Osaka 530-0001 (JP)**
- **KISHIKAWA, Yosuke**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) CURABLE EPOXY RESIN COMPOSITION, CURED PRODUCT, AND METHOD FOR PRODUCING CURED PRODUCT

(57) The disclosure provides a curable epoxy resin composition that provides a cured product utilizing biomass and exhibiting excellent heat resistance and electrical properties, a cured product, and a method for producing a cured product. The disclosure relates to a curable epoxy resin composition containing: a non-aromatic epoxy compound derived from biomass; and a curing agent derived from biomass, the curing agent including at least one selected from the group consisting of an acid anhydride, a thiol, and a phenolic compound.

EP 4 682 184 A1

## Description

TECHNICAL FIELD

The disclosure relates to curable epoxy resin compositions, cured products, and methods for producing cured products.

BACKGROUND ART

In order to promote a recycling-oriented society, the use of biomass has recently attracted attention in the field of materials.

A known curable epoxy resin composition containing biomass materials is one containing a diamine compound as a curing agent (for example, see Patent Literature 1).

CITATION LIST

- Patent Literature

Patent Literature 1: JP 2020-037649 A

SUMMARY OF INVENTION

- Technical Problem

The disclosure aims to provide a curable epoxy resin composition that provides a cured product utilizing biomass and exhibiting excellent heat resistance and excellent electrical properties, a cured product, and a method for producing a cured product.

- Solution to Problem

The disclosure (1) relates to a curable epoxy resin composition containing: a non-aromatic epoxy compound derived from biomass; and a curing agent derived from biomass, the curing agent including at least one selected from the group consisting of an acid anhydride, a thiol, and a phenolic compound.

The disclosure (2) relates to the curable epoxy resin composition according to the disclosure (1), wherein the non-aromatic epoxy compound and the curing agent each have a biobased content of 50% or higher.

The disclosure (3) relates to the curable epoxy resin composition according to the disclosure (1) or (2), wherein the non-aromatic epoxy compound and the curing agent each have a biobased content of 100%.

The disclosure (4) relates to the curable epoxy resin composition according to any one of the disclosures (1) to (3), wherein the non-aromatic epoxy compound has a ring structure other than an epoxy group.

The disclosure (5) relates to the curable epoxy resin composition according to any one of the disclosures (1) to (4), wherein the non-aromatic epoxy compound has two or more epoxy groups.

The disclosure (6) relates to the curable epoxy resin composition according to any one of the disclosures (1) to (5), wherein the non-aromatic epoxy compound includes a non-aromatic diepoxy compound.

The disclosure (7) relates to the curable epoxy resin composition according to any one of the disclosures (1) to (6), wherein the non-aromatic epoxy compound has an isosorbide structure.

The disclosure (8) relates to the curable epoxy resin composition according to any one of the disclosures (1) to (7), wherein the non-aromatic epoxy compound includes at least one selected from the group consisting of isosorbide diglycidyl ether, ethylene glycol diglycidyl ether, and poly(propylene glycol) diglycidyl ether.

The disclosure (9) relates to the curable epoxy resin composition according to any one of the disclosures (1) to (8), wherein the non-aromatic epoxy compound includes isosorbide diglycidyl ether.

The disclosure (10) relates to the curable epoxy resin composition according to any one of the disclosures (1) to (9), wherein the curing agent includes at least one selected from the group consisting of a thiol and a phenolic compound.

The disclosure (11) relates to the curable epoxy resin composition according to any one of the disclosures (1) to (10), wherein the acid anhydride has a ring structure other than an acid anhydride ring.

The disclosure (12) relates to the curable epoxy resin composition according to any one of the disclosures (1) to (11), wherein the acid anhydride includes at least one selected from the group consisting of maleic anhydride, phthalic anhydride, and 1,2,3,4-cyclobutanetetracarboxylic dianhydride.

The disclosure (13) relates to the curable epoxy resin composition according to any one of the disclosures (1) to

(12), wherein the thiol includes an aliphatic thiol.

The disclosure (14) relates to the curable epoxy resin composition according to any one of the disclosures (1) to (13), wherein the thiol includes at least one selected from the group consisting of pentaerythritol tetrakis(3-mercaptobutyrate) and L-cysteine.

The disclosure (15) relates to the curable epoxy resin composition according to any one of the disclosures (1) to (14), wherein the phenolic compound has two or more hydroxy groups.

The disclosure (16) relates to the curable epoxy resin composition according to any one of the disclosures (1) to (15), wherein the phenolic compound includes (+)-catechin hydrate.

The disclosure (17) relates to a cured product obtained by curing the curable epoxy resin composition according to any one of the disclosures (1) to (16).

The disclosure (18) relates to the cured product according to the disclosure (17), wherein the cured product has a relative permittivity at 10 GHz of 6.0 or lower.

The disclosure (19) relates to an insulating material containing the curable epoxy resin composition according to any one of the disclosures (1) to (16).

The disclosure (20) relates to a sealing material containing the curable epoxy resin composition according to any one of the disclosures (1) to (16).

The disclosure (21) relates to an optical material containing the curable epoxy resin composition according to any one of the disclosures (1) to (16).

The disclosure (22) relates to a printed circuit board material containing the curable epoxy resin composition according to any one of the disclosures (1) to (16).

The disclosure (23) relates to a method for producing a cured product, the method including: curing the curable epoxy resin composition according to any one of the disclosures (1) to (16).

- Advantageous Effects of Invention

The disclosure can provide a curable epoxy resin composition which provides a cured product utilizing biomass and exhibiting excellent heat resistance and electrical properties, a cured product, and a method for producing a cured product.

## DESCRIPTION OF EMBODIMENTS

The disclosure is specifically described hereinafter.

The curable epoxy resin composition of the disclosure contains: a non-aromatic epoxy compound derived from biomass; and a curing agent derived from biomass, the curing agent including at least one selected from the group consisting of an acid anhydride, a thiol, and a phenolic compound.

Since the curable epoxy resin composition of the disclosure contains: a non-aromatic epoxy compound derived from biomass; and a curing agent derived from biomass, the curing agent including at least one selected from the group consisting of an acid anhydride, a thiol, and a phenolic compound, the composition can provide a cured product exhibiting excellent heat resistance and electrical properties. The composition can lead to improved sustainability and reduced environmental impact.

The curable epoxy resin composition of the disclosure can further provide a cured product exhibiting excellent transparency and weather resistance.

The non-aromatic epoxy compound is derived from biomass. Here, "the non-aromatic epoxy compound is derived from biomass" means that the non-aromatic epoxy compound has a biobased content of 10% or higher.

The biobased content of the non-aromatic epoxy compound is preferably 50% or higher, more preferably 70% or higher, preferably 90% or higher, particularly preferably 100%.

The biobased content is measured in conformity with ASTM D6866.

In accordance with the concept of carbon neutrality, the use of the non-aromatic epoxy compound derived from biomass allows for reduction in substantial carbon dioxide emissions during combustion, improved sustainability, and reduced environmental impact.

Examples of the non-aromatic epoxy compound include an aliphatic epoxy compound. The aliphatic epoxy compound may have a ring structure other than an epoxy group or may not have a ring structure other than an epoxy group.

The non-aromatic epoxy compound may have at least one structure selected from the group consisting of an ether bond, an ester bond, and an amide bond in its structure.

Examples of the non-aromatic epoxy compound having no ring structure other than an epoxy group include: glycidyl ether-type epoxy compounds such as ethylene glycol diglycidyl ether, diethylene glycol diglycidyl ether, propylene glycol diglycidyl ether, dipropylene glycol diglycidyl ether, glycerol triglycidyl ether, and poly(propylene glycol) diglycidyl ether; glycidyl ester-type epoxy compounds obtained from a polycarboxylic acid such as a dimer acid and an anhydride

thereof as raw materials; and glycidyl amine-type epoxy compounds obtained from an aliphatic amine as a raw material.

Examples of the non-aromatic epoxy compound having a ring structure other than an epoxy group include: glycidyl ether-type epoxy compounds such as hydrogenated bisphenol A-type epoxy resin, hydrogenated bisphenol F-type epoxy resin, hydrogenated bisphenol AD-type epoxy resin, hydrogenated bisphenol S-type epoxy resin, hydrogenated phenol novolac-type epoxy resin, hydrogenated cresol novolac-type epoxy resin, tetrakis(glycidyloxycyclohexyl) ethane, 1,2-diglycidyloxycyclohexane, 1,3-diglycidyloxycyclohexane, 1,4-diglycidyloxycyclohexane, and isosorbide diglycidyl ether; glycidyl ester-type epoxy compounds such as diglycidyl tetrahydrophthalate, diglycidyl hexahydrophthalate, and dimethyl glycidyl hexahydrophthalate; glycidyl amine-type epoxy compounds such as N,N-diglycidylaminocyclohexane, 2-methyl-N,N-diglycidylaminocyclohexane, N,N-diglycidyl-4-glycidyloxycyclohexane, 1,1-bis(4-N,N-diglycidylaminocyclohexyl)methane, 1,2-bis(N,N-diglycidylaminomethyl)cyclohexane, 1,3-bis(N,N-diglycidylaminomethyl)cyclohexane, and 1,4-bis(N,N-diglycidylaminomethyl)cyclohexane; and alicyclic epoxy compounds obtained by oxidizing a double bond of a cyclohexene ring such as alicyclic diepoxy acetal and alicyclic diepoxy adipate.

The non-aromatic epoxy compound preferably has a ring structure other than an epoxy group.

The ring structure other than an epoxy group is preferably a non-aromatic ring, more preferably a saturated non-aromatic ring.

The ring structure other than an epoxy group may contain a hetero atom. Examples of the hetero atom include an oxygen atom, a nitrogen atom, and a sulfur atom, with an oxygen atom being preferred.

The ring structure other than an epoxy group may be either monocyclic or polycyclic, and the ring structure is preferably polycyclic, more preferably bicyclic.

The non-aromatic epoxy compound also preferably has a structure capable of forming a ring structure by curing. The ring structure that can be formed by curing may be a non-aromatic ring, with a saturated non-aromatic ring being preferred.

The ring structure that can be formed by curing may include a hetero atom. Examples of the hetero atom include an oxygen atom, a nitrogen atom, and a sulfur atom, with an oxygen atom being preferred.

The ring structure that can be formed by curing may be either monocyclic or polycyclic.

The non-aromatic epoxy compound preferably has two or more epoxy groups in the molecule, more preferably has six or less epoxy groups in a molecule, still more preferably three or less epoxy groups in a molecule. The non-aromatic epoxy compound more preferably has two epoxy groups; in other words, it is more preferably a non-aromatic diepoxy compound.

The non-aromatic epoxy compound is preferably a glycidyl ether-type epoxy resin, more preferably at least one selected from the group consisting of isosorbide diglycidyl ether, ethylene glycol diglycidyl ether, and poly(propylene glycol) diglycidyl ether, still more preferably isosorbide diglycidyl ether.

The non-aromatic epoxy compound is also preferably glycidyl ether-type epoxy resin having an aliphatic ring other than an epoxy group, more preferably isosorbide diglycidyl ether.

The non-aromatic epoxy compound preferably has an isosorbide structure.

The non-aromatic epoxy compound is preferably derived from plants. Using the non-aromatic epoxy compound derived from plants allows for improved sustainability and reduced environmental impact.

Examples of the non-aromatic epoxy compound derived from plants include isosorbide diglycidyl ether, ethylene glycol diglycidyl ether, and poly(propylene glycol) diglycidyl ether.

The curing agent is derived from biomass. Here, "the curing agent is derived from biomass" means that the curing agent has a biobased content of 10% or higher.

The biobased content is preferably 50% or higher, more preferably 70% or higher, still more preferably 90% or higher, particularly preferably 100%.

The biobased content is measured in conformity with ASTM D6866.

In accordance with the concept of carbon neutrality, the use of the curing agent derived from biomass allows for reduction in substantial carbon dioxide emissions during combustion, improved sustainability, and reduced environmental impact.

The curing agent includes at least one selected from the group consisting of an acid anhydride, a thiol, and a phenolic compound. One of them may be used alone or two or more of them may be used in combination.

Examples of the acid anhydride include maleic anhydride, dodecenylsuccinic anhydride, chlorendic anhydride, sebacic anhydride, phthalic anhydride, succinic anhydride, pyromellitic anhydride, trimellitic anhydride, cyclopentanetetracarboxylic dianhydride, hexahydrophthalic anhydride, methylhexahydrophthalic anhydride, tetramethylenemaleic anhydride, tetrahydrophthalic anhydride, methyltetrahydrophthalic anhydride, endomethylenetetrahydrophthalic anhydride, methylendomethylenetetrahydrophthalic anhydride, oxabicyclodicarboxylic anhydride, 1,2,3,4-cyclobutanetetracarboxylic dianhydride, mellophanic dianhydride, 5-(2,5-dioxotetrahydroxyfuryl)-3-methyl-3-cyclohexene-1,2-dicarboxylic anhydride, and methylnadic anhydride.

The acid anhydride preferably has a ring structure other than an acid anhydride ring in a molecule.

The acid anhydride preferably includes at least one selected from the group consisting of maleic anhydride,

phthalic anhydride, succinic anhydride, oxabicyclodicarboxylic anhydride, 1,2,3,4-cyclobutanetetracarboxylic dianhydride, and mellophanic dianhydride, more preferably at least one selected from the group consisting of maleic anhydride, phthalic anhydride, and 1,2,3,4-cyclobutanetetracarboxylic dianhydride.

Examples of the thiol include mercaptoacetic acid, 2-mercaptopropionic acid, 3-mercaptopropionic acid, 3-mercaptobutanoic acid, 4-mercaptobutanoic acid, mercaptosuccinic acid, mercaptostearic acid, mercaptooctanoic acid, 4-mercaptobenzoic acid, 2,3,5,6-tetrafluoro-4-mercaptobenzoic acid, L-cysteine, N-acetyl-L-cysteine, 3-methoxybutyl 3-mercaptopropionic acid, 3-mercapto-2-methylpropionic acid, hexanedithiol, decanedithiol, 1,4-butanediol bisthiopropionate, 1,4-butanediol bisthioglycolate, ethylene glycol bisthioglycolate, ethylene glycol bisthiopropionate, trimethylolpropane tristhioglycolate, trimethylolpropane tristhiopropionate, trimethylolpropane tris(3-mercaptobutyrate), pentaerythritol tetrakisthioglycolate, pentaerythritol tetrakisthiopropionate, trimercaptopropionic acid tris(2-hydroxyethyl) isocyanurate, 1,4-dimethylmercaptobenzene, 2,4,6-trimercapto-s-triazine, 2-(N,N-dibutylamino)-4,6-dimercapto-s-triazine, tetraethylene glycol bis 3-mercaptopropionate, trimethylolpropane tris 3-mercaptopropionate, tris(3-mercaptopropynyloxyethyl) isocyanurate, pentaerythritol tetrakis 3-mercaptopropionate, dipentaerythritol tetrakis 3-mercaptopropionate, 1,4-bis(3-mercaptobutyryloxy)butane, 1,3,5-tris(3-mercaptobutyloxyethyl)-1,3,5-triazine-2,4,6(1H,3H,5H)-trione, and pentaerythritol tetrakis(3-mercaptobutyrate).

The thiol may be either an aliphatic thiol or an aromatic thiol, with an aliphatic thiol being preferred.

The thiol may be a compound obtained by converting an OH or COOH group of a biomass-derived compound into an SH group.

The thiol preferably includes at least one selected from the group consisting of pentaerythritol tetrakis(3-mercaptobutyrate) and L-cysteine.

Examples of the phenolic compound include polyhydric phenols such as bisphenol A, bisphenol F, bisphenol S, bisphenol AD, hydroquinone, resorcinol, methyl resorcinol, biphenol, tetramethyl biphenol, dihydroxynaphthalene, dihydroxydiphenyl ether, thiodiphenols, catechin hydrates, phenol novolac resin, cresol novolac resin, phenol aralkyl resin, biphenyl aralkyl resin, naphthol aralkyl resin, terpene phenolic resin, dicyclopentadiene phenolic resin, bisphenol A novolac resin, trisphenol methane-type resin, naphthol novolac resin, brominated bisphenol A, and brominated phenol novolac resin; lignin-modified phenolic resins; lignin decomposition products such as catechol, cresol, and creosol; cashew nut shell liquid such as anacardic acid, cardanol, cardol, and 2-methylcardol; resins obtained by adding biomass-derived functional groups to bisphenol; polyhydric phenolic resins obtainable by a condensation reaction of a phenol and an aldehyde such as benzaldehyde, hydroxy benzaldehyde, crotonaldehyde, or glyoxal; polyhydric phenolic resins obtainable by a condensation reaction of a xylene resin and a phenol; cocondensated resins of heavy oil or a pitch, a phenol, and a formaldehyde; and phenolic resins such as a phenol/benzaldehyde/xylylene dimethoxide polycondensate, a phenol/benzaldehyde/xylylene dihalide polycondensate, a phenol/benzaldehyde/4,4'-dimethoxidebiphenyl polycondensate, and a phenol/benzaldehyde/4,4'-dihalide biphenyl polycondensate.

The phenolic compound preferably has two or more hydroxy groups. More preferably, one or more aromatic rings each have two or more hydroxy groups.

The phenolic compound preferably includes at least one selected from the group consisting of catechin hydrate, lignin-modified phenolic resin, catechol, cardol, 2-methylcardol, and resin obtained by adding biomass-derived functional groups to bisphenol. The phenolic compound is more preferably a catechin hydrate, still more preferably (+)-catechin hydrate.

The curing agent may include at least one selected from the group consisting of a thiol and a phenolic compound.

The curing agent is preferably derived from plants. Using the curing agent derived from plants allows for improved sustainability and reduced environmental impact.

Examples of the curing agent derived from plants include phthalic anhydride, maleic anhydride, pentaerythritol tetrakis(3-mercaptobutyrate), and catechin hydrate (preferably (+)-catechin hydrate).

The curable epoxy resin composition of the disclosure may have an equivalent ratio of the epoxy group of the non-aromatic epoxy compound to the functional group of the curing agent (epoxy group/functional group) of 0.75 or higher, preferably 0.85 or higher, and may also be 1.50 or lower, preferably 1.25 or lower.

The curable epoxy resin composition of the disclosure may contain an organic solvent. The amount of the organic solvent may be 75% by mass or less, preferably 65% by mass or less, relative to the curable epoxy resin composition, and may also be 10% by mass or more.

Examples of the organic solvent include toluene, xylene, acetone, methyl ethyl ketone, methyl isobutyl ketone, ethyl acetate, butyl acetate, dimethylformamide, and N-methylpyrrolidone. These may be used alone or in combination of two or more thereof.

The curable epoxy resin composition of the disclosure may contain a curing accelerator. The amount of the curing accelerator may be 20% by mass or less, preferably 15% by mass or less, relative to the curable epoxy resin composition, and may also be 0.5% by mass or more.

Examples of the curing accelerator include 2-methylimidazole, 2-ethylimidazole, 2-ethyl-4-methylimidazole, 2-(dimethylaminomethyl)phenol, 2,4,6-tris(dimethylaminomethyl)phenol, 1,8-diazabicyclo[5,4,0]-7-undecene, triphenylphosphine, and methyldiphenylphosphine. These may be used alone or in combination of two or more thereof.

The curable epoxy resin composition of the disclosure may optionally contain an additive commonly used in the art. Examples of the additive include a flame retarder, a storage stability enhancer, a filler, a diluent, a pigment, a flexibility imparting agent, a coupling agent, an antioxidant, an anti-settling agent, and a dispersant. The amount of the additive may be 0.01 to 10% by mass relative to the curable epoxy resin composition.

The disclosure also provides a cured product obtained by curing the aforementioned curable epoxy resin composition of the disclosure. Since the cured product of the disclosure is obtained by curing the curable epoxy resin composition, the cured product exhibits excellent heat resistance and excellent electrical properties as well as excellent transparency and excellent weather resistance. The cured product can lead to improved sustainability and reduced environmental impact.

Examples of methods for curing the curable epoxy resin composition include those mentioned below.

The cured product of the disclosure preferably has a glass transition temperature (Tg) of 22°C or higher, more preferably 50°C or higher, still more preferably 80°C or higher, further preferably 100°C or higher, and may also be 400°C or lower.

The glass transition temperature can be determined as follows. Specifically, using a differential scanning calorimeter (Q1000 available from TA Instruments), a 5-mg sample is subjected to temperature-modulated DSC measurement in which the temperature is increased on average by repeated heating and cooling with a constant period and a constant amplitude, so that a DSC curve is obtained. The temperature is then read at the intermediate point of two intersections between each of the extension lines of the base lines before and after the secondary transition of the DSC curve and the tangent line at the inflection point of the DSC curve. This temperature is defined as the glass transition temperature.

The cured product of the disclosure preferably has a thermal decomposition temperature (Td) of 125°C or higher, more preferably 150°C or higher, still more preferably 200°C or higher, and may also be 450°C or lower.

The thermal decomposition temperature was measured using a thermal analyzer TG-DTA 2000SA available from Bruker AXS. The measurement is performed in a nitrogen-purged atmosphere at 150 mL/min. A 10-mg sample was placed in a platinum pan and held at 25°C for 10 minutes, and then the temperature was increased to 600°C at a temperature-increasing rate of 10°C/min. Based on the initial mass, the 1% mass loss temperature (Td1) was defined as the thermal decomposition temperature for evaluation.

The cured product of the disclosure preferably has a relative permittivity at 10 GHz of 6.0 or lower, more preferably 4.0 or lower, still more preferably 3.0 or lower, particularly preferably 2.5 or lower, and may also be 2.0 or higher.

The cured product of the disclosure preferably has a dissipation factor at 10 GHz of 0.1 or lower, more preferably 0.05 or lower, still more preferably 0.025 or lower, further preferably 0.02 or lower, particularly preferably 0.01 or lower, and may also be 0.0001 or higher.

The relative permittivity and dissipation factor of the cured product are measured using a cavity resonator dielectric constant measurement device (available from AET, Inc.) at a frequency of 10 GHz.

The relative permittivity and dissipation factor at a frequency of 10 GHz of the cured product are measured using a powder sample with a cavity resonator dielectric constant measurement device (available from AET, Inc.). The specific gravity of the sample is measured using a specific gravity meter AUW120D available from Shimadzu Corporation.

Materials with low relative permittivity and dissipation factor are useful as materials for electronic devices and electric devices which exhibit a low transmission loss in a high frequency region.

Here, the transmission loss $\alpha d$ satisfies the following relation (formula (1)) together with the frequency f, and the relative permittivity $\varepsilon r$ and the dissipation factor $\tan\delta$ of a dielectric layer. The transmission loss is in direct proportion to the dissipation factor and the square root of the relative permittivity. Therefore, in order to lower the transmission loss, a low dissipation factor is more crucial.

[Math. 1]

$$\alpha d \propto f \times \sqrt{\varepsilon r} \times \tan\delta \cdots (1)$$

The cured product of the disclosure preferably has a transmittance of 70% or higher, more preferably 80% or higher, at a thickness of 100 μm and a wavelength of 550 nm. The transmittance may be 100%.

The transmittance is the value measured with an ultraviolet spectrophotometer.

Materials with high transmittance are useful as UV-LED sealant. Without any compounds that have an aromatic ring, the cured product exhibits high transmittance.

The cured product of the disclosure preferably has a refractive index of 1.35 to 1.60. The refractive index is more preferably 1.57 or lower, still more preferably 1.55 or lower, and may be 1.40 or higher or 1.42 or higher. The refractive index is the value measured with an Abbe refractometer.

The cured product of the disclosure also exhibits excellent weather resistance.

The weather resistance refers to changes in appearance and mechanical strength when exposed under constant conditions. For example, the weather resistance can be measured using an accelerated weathering tester with UV fluorescent lamps available from Q-Lab Corporation.
Using the cured product of the disclosure instead of conventional cured products allows for improved sustainability and reduced environmental impact.
An index of the environmental impact is the amount of carbon dioxide emissions during incineration of cured product. The amount of carbon dioxide emissions during incineration is a value calculated on the assumption that the biomass-derived carbon contained in the cured product is completely combusted into carbon dioxide. Since the carbon derived from biomass raw materials are considered as carbon neutral, the amount of carbon dioxide emissions during combustion is taken as 0.
The amount of carbon dioxide emissions per 1 kg of the incinerated cured product is preferably 1 kg or less, more preferably 0.8 kg or less, still more preferably 0.6 kg or less, further preferably 0.4 kg or less, particularly preferably 0.2 kg or less.
The curable epoxy resin composition of the disclosure and the cured product of the disclosure exhibit excellent heat resistance and excellent electrical properties as well as excellent transparency and excellent weather resistance. Thus, both are well-suited for use in insulating materials; sealing materials for LEDs, solar cells, and electronic parts; optical materials such as optical lenses, optical devices, optical connectors, optical wave guides, and resins for optical shaping; printed circuit board materials; semiconductor package substrate materials; communication cover antennas; drone housings; and transparent heater substrates. Among these applications, the curable epoxy resin composition and the cured product are well-suited for use in insulating materials, sealing materials, optical materials, and printed circuit board materials, particularly well-suited for use in insulating materials.
The disclosure also provides an insulating material, sealing material, optical material, and printed circuit board material, each containing the curable epoxy resin composition of the disclosure. The insulating material, sealing material, optical material, and printed circuit board material of the disclosure each exhibit excellent heat resistance and excellent electrical properties as well as excellent transparency and excellent weather resistance. They also allow for improved sustainability and reduced environmental impact.
The insulating material, sealing material, optical material, and printed circuit board material of the disclosure each may contain either the curable epoxy resin composition of the disclosure or the cured product of the disclosure.
The disclosure additionally provides a method for producing a cured product, the method including: curing the curable epoxy resin composition of the disclosure.
The method for curing the curable epoxy resin composition can be any method such as heating in an oven or hot air drying. The temperature may be constant or may have a gradient. The temperature may also be set in a temperature region of 100°C or less. However, the curable epoxy resin composition of the disclosure exhibits excellent heat resistance and is applicable to processing within a high temperature range of 120°C to 200°C, for example. The curing time is not limited, and may be 1 to 15 hours, for example.
The curing temperature is preferably 200°C or lower. The drying time within a high temperature range of 160°C to 200°C, for example, is preferably five hours or less, more preferably three hours or less.
It should be appreciated that a variety of modifications and changes in the structure and other details may be made to the aforementioned embodiments without departing from the spirit and scope of the claims.

## EXAMPLES

The disclosure is described in more detail below with reference to examples, but is not limited to these examples.
The properties herein were determined by the following methods.

(Glass transition temperature)

The glass transition temperature was determined as follows. Specifically, using a differential scanning calorimeter (Q1000 available from TA Instruments), a 5 mg sample was subjected to a temperature-modulated DSC measurement method to obtain a DSC curve. The measurement was performed by repetitive heating and cooling with constant periodicity and amplitude while the average temperature was increasing. The peak top temperature of the differential curve defined in JIS K 6240 was used as the glass transition temperature for evaluation.

(Thermal decomposition temperature)

The thermal decomposition temperature was measured using a thermal analyzer TG-DTA 2000SA available from Bruker AXS. The measurement is performed under a nitrogen-purged atmosphere at a flow rate of 150mL/min. A 10 mg sample was placed in a platinum pan and held at 25°C for 10 minutes, and then the temperature was increased to

600°C at a temperature-increasing rate of 10°C/min. Based on the initial mass, the 1% mass loss temperature (Td1) was defined as the thermal decomposition temperature for evaluation.

(Method for measuring relative permittivity and dissipation factor)

The relative permittivity and dissipation factor at a frequency of 10 GHz of the cured product were measured using a powdery cavity resonator dielectric constant measurement device (available from AET, Inc.) for evaluation. The specific gravity of the sample was measured using a specific gravity meter AUW120D available from Shimadzu Corporation.

The following materials were used in examples and comparative examples. Isosorbide diglycidyl ether (A: 100% biobased content, B: 50% biobased content)

[Chem. 1]

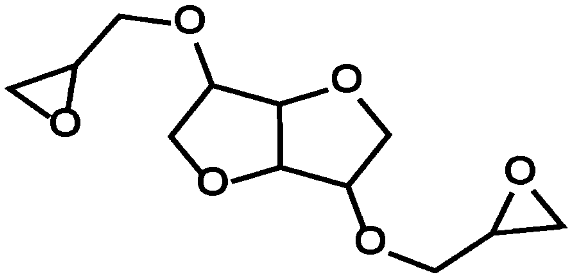

Ethylene glycol diglycidyl ether (100% biobased content)

[Chem. 2]

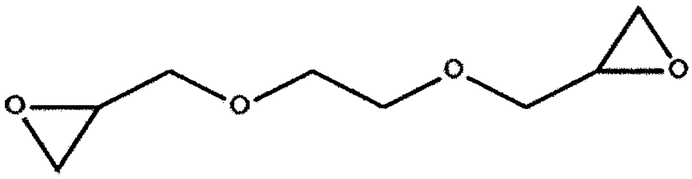

Poly(propylene glycol) diglycidyl ether (100% biobased content, Mn: 380 or lower)

[Chem. 3]

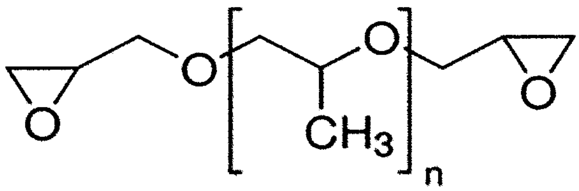

Phthalic anhydride (100% biobased content)

[Chem. 4]

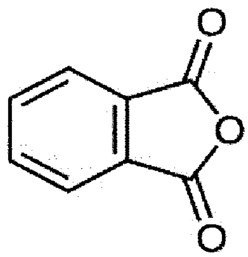

Maleic anhydride (100% biobased content)

[Chem. 5]

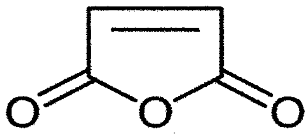

Pentaerythritol tetrakis(3-mercaptobutyrate) (100% biobased content)

[Chem. 6]

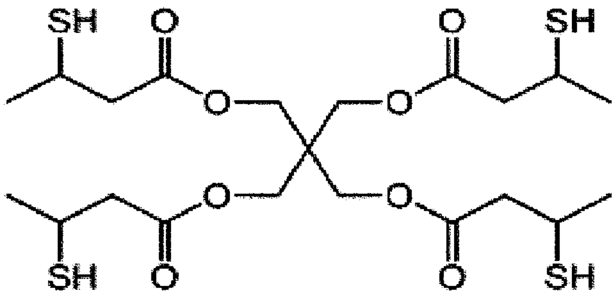

(+)-Catechin hydrate (100% biobased content)

[Chem. 7]

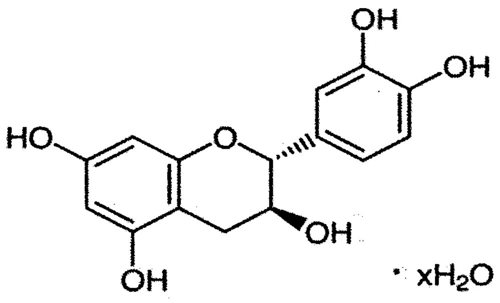

Pentamethylenediamine (100% biobased content)

[Chem. 8]

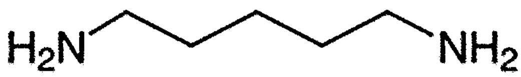

Example 1

Phthalic anhydride (2.06 g) and ethyl acetate (5.0 mL) were put into a 20 mL glass container and underwent heat stirring on a hot plate heated to 70°C. The phthalic anhydride gradually dissolved, resulting in a colorless and transparent solution. Then, isosorbide diglycidyl ether A (2.0 g) was gradually dropped into the solution. After the hot plate was removed, the solution was stirred at room temperature for approximately five minutes, followed by addition of 2,4,6-tris(dimethylaminomethyl)phenol (DMP-30) (20 mg). After stirring for five minutes, the solution was cast onto a Teflon® sheet. The solution was cured as is in a temperature-controlled dryer (at 120°C for 5 hours and then at 150°C for 10 hours) whereby 3.7 g of a cured product was obtained.

The obtained cured product was subjected to various tests. The resulting properties are shown in Table 1.

Example 2

Maleic anhydride (2.1 g) and ethyl acetate (10 mL) were put into a 20 mL glass container and underwent heat stirring on a hot plate heated to 70°C. The maleic anhydride gradually dissolved, resulting in a colorless and transparent solution. Then, isosorbide diglycidyl ether A (3.0 g) was gradually dropped into the solution. After the hot plate was removed, the solution was stirred at room temperature for approximately five minutes, followed by addition of DMP-30 (24 mg). After stirring for five minutes, the solution was cast onto a Teflon® sheet. The solution was cured as is in a temperature-controlled dryer (at 120°C for 5 hours and then at 150°C for 10 hours) whereby 4.5 g of a cured product was obtained.

The obtained cured product was subjected to various tests. The resulting properties are shown in Table 2.

Example 3

Isosorbide diglycidyl ether A (1.9 g) and pentaerythritol tetrakis(3-mercaptobutyrate) (2.0 g) were put into a 10 mL glass container and stirred at room temperature for approximately 10 minutes. Then, 2-ethyl-4-methylimidazole (2E4MZ) (19.5 mg) was added into the solution. After stirring for 10 minutes, the solution was cast onto a Teflon® sheet. The solution was cured as is (at 100°C for one hour) whereby 3.5 g of a cured product was obtained.

The obtained cured product was subjected to various tests. The resulting properties are shown in Table 2.

Example 4

(+)-catechin hydrate (2.1 g) and ethyl acetate (8.0 mL) were put into a 20 mL glass container and underwent heat stirring on a hot plate heated to 70°C. The (+)-catechin hydrate gradually dissolved, resulting in an orange solution. Then, isosorbide diglycidyl ether A (3.5 g) was gradually dropped into the solution. After the hot plate was removed, the solution was stirred at room temperature for approximately five minutes, followed by addition of 2E4MZ (28 mg). After stirring for five minutes, the solution was cast onto a Teflon® sheet. The solution was cured as is in a temperature-controlled dryer (at 160°C for 1.5 hours and then at 200°C for 1.5 hours) whereby 5.5 g of a cured product was obtained.

The obtained cured product was subjected to various tests. The resulting properties are shown in Table 2.

Example 5

Phthalic anhydride (3.06 g) and ethyl acetate (8.0 mL) were put into a 20 mL glass container and underwent heat stirring on a hot plate heated to 70°C. The phthalic anhydride gradually dissolved, resulting in a colorless and transparent solution. Then, ethylene glycol diglycidyl ether (2.0 g) was gradually dropped into the solution. After the hot plate was removed, the solution was stirred at room temperature for approximately five minutes, followed by addition of DMP-30 (20 mg). After stirring for five minutes, the solution was cast onto a Teflon® sheet. The solution was cured as is in a temperature-controlled dryer (at 120°C for 5 hours and then at 150°C for 10 hours) whereby 4.6 g of a cured product was obtained.

The obtained cured product was subjected to various tests. The resulting properties are shown in Table 2.

Example 6

Phthalic anhydride (1.89 g) and ethyl acetate (8.0 mL) were put into a 20 mL glass container and underwent heat stirring on a hot plate heated to 70°C. The phthalic anhydride gradually dissolved, resulting in a colorless and transparent solution. Then, poly(propylene glycol) diglycidyl ether (2.7 g) was gradually dropped into the solution. After the hot plate was removed, the solution was stirred at room temperature for approximately five minutes, followed by addition of DMP-30 (20 mg). After stirring for five minutes, the solution was cast onto a Teflon® sheet. The solution was cured as is in a temperature-controlled dryer (at 120°C for 5 hours and then at 150°C for 10 hours) whereby 4.2 g of a cured product was obtained.

The obtained cured product was subjected to various tests. The resulting properties are shown in Table 2.

Example 7

Except that isosorbide diglycidyl ether B was used instead of isosorbide diglycidyl ether A, 3.7 g of the cured product was prepared as in Example 1.

The obtained cured product was subjected to various tests. The resulting properties are shown in Table 3.

Comparative Example 1

Isosorbide diglycidyl ether A (5.0 g) was put into a 10 mL glass container and stirred at room temperature. Then, pentamethylenediamine (1.98 g) was gradually dropped into the solution. Iisosorbide diglycidyl ether gradually dissolved, resulting in a colorless and transparent solution. After stirring at room temperature for approximately 15 minutes, the solution was cast into an aluminum cup and a Kapton film. The solution was cured as is in a temperature-controlled dryer (at 120°C for 5 hours and then at 150°C for 10 hours) to obtain a cured product of 3.7 g.

The obtained cured product was subjected to various tests. The resulting properties are shown in Table 1.

[Table 1]

| | Example 1 | Comparative Example 1 |
|---|---|---|
| Non-aromatic epoxy compound | Isosorbide diglycidyl ether | |
| Curing agent | Phthalic anhydride | Pentamethylenediamine |
| Glass transition temperature | 130.3°C | 20.1°C |
| Thermal decomposition temperature | 189.3°C | 106.25°C |
| Relative permittivity | 2.735 | 2.747 |
| Dissipation factor | 0.0187 | 0.0272 |

[Table 2]

| | Example 2 | Example 3 | Example 4 | Example 5 | Example 6 |
|---|---|---|---|---|---|
| Non-aromatic epoxy compound | Isosorbide diglycidyl ether | | | Ethylene glycol glycidyl ether | Poly(propylene glycol) diglycidyl ether |

(continued)

| | Example 2 | Example 3 | Example 4 | Example 5 | Example 6 |
|---|---|---|---|---|---|
| Curing agent | Maleic anhydride | Pentaerythritol tetrakis (3-mercaptobutyrate) | (+)-Catechin hydrate | Phthalic anhydride | |
| Glass transition temperature | 93.8°C | 24.3°C | 170.7°C | 63.8°C | 28.0°C |
| Thermal decomposition temperature | 270.4°C | 275.9°C | 129.9°C | 191.4°C | 213.7°C |

[Table 3]

| | Example 7 |
|---|---|
| Non-aromatic epoxy compound | Isosorbide diglycidyl ether |
| Biobased content of non-aromatic epoxy compound | 50% |
| Curing agent | Phthalic anhydride |
| Glass transition temperature | 130.1°C |
| Thermal decomposition temperature | 189.5°C |
| Relative permittivity | 2.738 |
| Dissipation factor | 0.019 |

(Amount of carbon dioxide emissions)

The amounts of carbon dioxide emissions of the cured products obtained in the examples were calculated. The amount of carbon dioxide emissions was calculated as described below.

For each example, the amount of non-biomass-derived carbon contained in the epoxy compound, curing agent, and catalyst (kg/1 kg (the amount of non-biomass-derived carbon contained in 1 kg of the cured product)) is calculated.

In accordance with the concept of carbon neutrality, carbon dioxide composed of biomass-derived carbon is excluded from the amount of carbon dioxide emissions. Therefore, the amount of carbon dioxide emissions generated from 1 kg of a cured product upon combustion corresponds to the amount of carbon dioxide composed of non-biomass-derived carbon, which is calculated by the following formula.

Amount of carbon dioxide emissions (kg/1 kg) = amount of non-biomass-derived carbon (kg/1 kg) × 44/12

The amount of carbon dioxide emissions in Example 1 is calculated. The materials used in Example 1 are as follows.

Isosorbide diglycidyl ether A (biomass-derived, molecular weight: 258.2, carbon content: 55.81% by mass): 2.0 g (49.02% by mass relative to the whole cured product)

Phthalic anhydride (biomass-derived, molecular weight: 148.12, carbon content: 64.82% by mass): 2.06 g (50.49% by mass relative to the whole cured product)

2,4,6-tris(dimethylaminomethyl)phenol (DMP-30) (non-biomass-derived, molecular weight: 265.4, carbon content: 67.88% by mass): 0.02 g (0.49% by mass relative to the whole cured product)

Consequently, the amount of non-biomass-derived carbon contained in 1 kg of the cured product (kg/1 kg) in Example 1 is as follows.

$$67.83/100 \times 0.49/100 = 0.00332 \text{ (kg/1 kg)}$$

The amount of carbon dioxide emissions of the cured product in Example 1 can be determined as follows.

$$0.00332 \times 44/12 = 0.012 \text{ (kg/1 kg)}$$

In Example 7, the amount of carbon dioxide emissions was calculated as in Example 1 and was found to be1.0 kg/1 kg.

As a reference, the amount of carbon dioxide emissions in the case of using non-biomass-derived isosorbide diglycidyl ether, non-biomass-derived phthalic anhydride, and non-biomass-derived DMP-30 was calculated as in Example 1 and found to be 2.2 kg/1 kg.

Consequently, the cured product of the disclosure exhibits significantly low environmental impact.

## Claims

1. A curable epoxy resin composition comprising:

   a non-aromatic epoxy compound derived from biomass; and
   a curing agent derived from biomass,
   the curing agent including at least one selected from the group consisting of an acid anhydride, a thiol, and a phenolic compound.

2. The curable epoxy resin composition according to claim 1,
   wherein the non-aromatic epoxy compound and the curing agent each have a biobased content of 50% or higher.

3. The curable epoxy resin composition according to claim 1 or 2,
   wherein the non-aromatic epoxy compound and the curing agent each have a biobased content of 100%.

4. The curable epoxy resin composition according to any one of claims 1 to 3,
   wherein the non-aromatic epoxy compound has a ring structure other than an epoxy group.

5. The curable epoxy resin composition according to any one of claims 1 to 4,
   wherein the non-aromatic epoxy compound has two or more epoxy groups.

6. The curable epoxy resin composition according to any one of claims 1 to 5,
   wherein the non-aromatic epoxy compound includes a non-aromatic diepoxy compound.

7. The curable epoxy resin composition according to any one of claims 1 to 6,
   wherein the non-aromatic epoxy compound has an isosorbide structure.

8. The curable epoxy resin composition according to any one of claims 1 to 7,
   wherein the non-aromatic epoxy compound includes at least one selected from the group consisting of isosorbide diglycidyl ether, ethylene glycol diglycidyl ether, and poly(propylene glycol) diglycidyl ether.

9. The curable epoxy resin composition according to any one of claims 1 to 8,
   wherein the non-aromatic epoxy compound includes isosorbide diglycidyl ether.

10. The curable epoxy resin composition according to any one of claims 1 to 9,
    wherein the curing agent includes at least one selected from the group consisting of a thiol and a phenolic compound.

11. The curable epoxy resin composition according to any one of claims 1 to 10,
    wherein the acid anhydride has a ring structure other than an acid anhydride ring.

12. The curable epoxy resin composition according to any one of claims 1 to 11,
    wherein the acid anhydride includes at least one selected from the group consisting of maleic anhydride, phthalic anhydride, and 1,2,3,4-cyclobutanetetracarboxylic dianhydride.

13. The curable epoxy resin composition according to any one of claims 1 to 12,
    wherein the thiol includes an aliphatic thiol.

14. The curable epoxy resin composition according to any one of claims 1 to 13,
    wherein the thiol includes at least one selected from the group consisting of pentaerythritol tetrakis(3-mercaptobutyrate) and L-cysteine.

**15.** The curable epoxy resin composition according to any one of claims 1 to 14, wherein the phenolic compound has two or more hydroxy groups.

**16.** The curable epoxy resin composition according to any one of claims 1 to 15, wherein the phenolic compound includes (+)-catechin hydrate.

**17.** A cured product obtained by curing the curable epoxy resin composition according to any one of claims 1 to 16.

**18.** The cured product according to claim 17, wherein the cured product has a relative permittivity at 10 GHz of 6.0 or lower.

**19.** An insulating material comprising the curable epoxy resin composition according to any one of claims 1 to 16.

**20.** A sealing material comprising the curable epoxy resin composition according to any one of claims 1 to 16.

**21.** An optical material comprising the curable epoxy resin composition according to any one of claims 1 to 16.

**22.** A printed circuit board material comprising the curable epoxy resin composition according to any one of claims 1 to 16.

**23.** A method for producing a cured product, the method comprising:
curing the curable epoxy resin composition according to any one of claims 1 to 16.

## INTERNATIONAL SEARCH REPORT

International application No. **PCT/JP2025/012906**

### A. CLASSIFICATION OF SUBJECT MATTER

***C08G 59/24***(2006.01)i; ***C08G 59/42***(2006.01)i; ***C08G 59/66***(2006.01)i; ***C08G 65/40***(2006.01)i
FI: C08G59/24; C08G59/42; C08G59/66; C08G65/40

According to International Patent Classification (IPC) or to both national classification and IPC

### B. FIELDS SEARCHED

Minimum documentation searched (classification system followed by classification symbols)

C08G59/24; C08G59/42; C08G59/66; C08G65/40

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2008/147473 A1 (NEW JERSEY INSTITUTE OF TECHNOLOGY) 04 December 2008 (2008-12-04)<br>claims, paragraphs [0002], [0015], examples 5, 9 | 1-9, 11, 13-18, 23 |
| Y | claims, paragraphs [0002], [0015], examples 5, 9 | 10-16, 19-22 |
| X | JP 2015-501838 A (3M INNOVATIVE PROPERTIES COMPANY) 19 January 2015 (2015-01-19)<br>claims, paragraphs [0004], [0067], examples 1-42 | 1-12, 15-17, 23 |
| Y | WO 2023/182522 A1 (SEKISUI CHEMICAL CO., LTD.) 28 September 2023 (2023-09-28)<br>paragraphs [0062], [0083], [0086]-[0087], [0089] | 10-16, 19-22 |
| A | US 2015/0010697 A1 (ELANTAS G.M.B.H.) 08 January 2015 (2015-01-08) | 1-23 |
| A | US 2019/0055401 A1 (HYUNDAI MOBIS CO., LTD.) 21 February 2019 (2019-02-21) | 1-23 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 June 2025** | **10 June 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2025/012906**

| Patent document cited in search report | Publication date (day/month/year) | Patent family member(s) | Publication date (day/month/year) |
|---|---|---|---|
| WO 2008/147473 A1 | 04 December 2008 | US 2008/0009599 A1 | |
| JP 2015-501838 A | 19 January 2015 | US 2014/0350196 A1<br>claims, paragraphs [0004], [0041], examples 1-42<br>WO 2013/090138 A1<br>EP 2791144 A1<br>KR 10-2014-0106679 A<br>CN 104159903 A<br>BR 112014014556 A2 | |
| WO 2023/182522 A1 | 28 September 2023 | JP 2024-160307 A<br>CN 118891302 A<br>KR 10-2024-0167002 A | |
| US 2015/0010697 A1 | 08 January 2015 | WO 2013/120872 A2<br>EP 2815407 A2<br>DE 102012202161 A1<br>TW 201336921 A<br>CN 104160454 A<br>KR 10-2014-0128419 A<br>BR 112014020208 A2 | |
| US 2019/0055401 A1 | 21 February 2019 | DE 102018213910 A1<br>KR 10-2019-0020594 A<br>CN 109423033 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020037649 A